# DEMANDE DE BREVET EUROPEEN

(11) **EP 0 892 029 A1**
(43) Date de publication de la demande: **20.01.1999**
(21) Numéro de dépôt: 98870158.7
(22) Date de dépôt: 10.07.1998
(51) Int. Cl.: C10B 1/10, C10B 53/02, C10B 53/00, F27B 7/08

(54) **Dispositif de pyrolyse de biomasse**

(30) Priorité: 11.07.1997 BE 9700610
(71) Demandeur: Pro-Natura International, 75008 Paris (FR)
(72) Inventeur: Hadibi, Rachid, 94700 Maison-Alfort (FR)
(74) Mandataire: Van Malderen, Michel

(57) **Abrégé**

La présente invention concerne un dispositif de transformation d'une biomasse en produits énergétiques tels que du charbon de biomasse, comportant un cylindre externe (2) dans lequel est emboîté un cylindre interne (1) contenant une biomasse chauffée de manière à produire des gaz de pyrolyse injectés dans une chambre de combustion (5) via un raccordement (6) raccordant le cylindre (1) à la chambre de combustion (5), caractérisé en ce que l'axe (B) de l'extrémité (7) du raccordement (6) est disposé de manière perpendiculaire à l'axe (A) des cylindres (1, 2).

## Description

### Objet de l'invention

La présente invention concerne un nouveau dispositif de pyrolyse de biomasse destiné à former du charbon de biomasse à partir de biomasse constituée par exemple de produits résiduels de l'agriculture tels que de la paille, des produits de fauche de graminées ou des produits (tels que des roseaux, graminées de la savane, etc.) présents en grande quantité de manière naturelle.

### Arrière-plan technologique à la base de l'invention

Il est connu que dans un grand nombre de pays du tiers-monde, la majorité des besoins quotidiens dans le domaine énergétique est apportée par la combustion du bois ou du charbon de bois.

Ceci provoque un déboisement important et la désertification de nombreuses régions, qui entraînent de grands problèmes écologiques et empêchent un développement durable de l'agriculture dans certains pays.

Il a été proposé depuis de nombreuses années la possibilité de développer différents produits consommables directement tels que le charbon de bois à partir de la biomasse de produits agricoles non consommés.

Une telle biomasse peut être récupérée des produits issus de l'agriculture, notamment des graminées cultivées dans ces pays (riz, blé, mil, sorgho, etc.) ou être collectée en grande quantité dans des sites non exploités (roseaux des marécages, graminées des savanes, etc.).

### Etat de la technique

Le brevet américain US-4344772 décrit un dispositif de combustion de matériaux solides combustibles, qui peut être associée ou non à une carbonisation. Ce dispositif comprend un compartiment de structure cylindrique destiné au séchage et à la pyrolyse des matériaux combustibles solides. Autour de cette structure cylindrique sont disposés en serpentins deux tubes coaxiaux formant un anneau autour de la matière combustible. Un de ces tubes coaxiaux peut être utilisé pour obtenir un préchauffage de l'air de combustion utilisé dans la combustion des gaz de pyrolyse formés.

La demande de brevet allemand DE-3513540 décrit un dispositif de traitement thermique de matériaux organiques et inorganiques, pour obtenir en particulier une pyrolyse des substances organiques. Ce dispositif comprend un compartiment dans lequel est disposé un faisceau de canalisations entraînées en rotation, et comprend également un moyen pour exposer les produits organiques à un échauffement indirect par des gaz selon une direction perpendiculaire à l'axe de ces canalisations. Les canalisations communiquent ensuite avec un compartiment où se fait la séparation entre les gaz de pyrolyse et la coke de pyrolyse ainsi produite.

La demande de brevet allemand DE-4413668 décrit un dispositif de récupération de gaz de pyrolyse traités par unité de carbonisation. Les gaz sont utilisés pour une produits électrique, et une partie des gaz produits est réinjectée dans une chambre de pyrolyse d'une unité de carbonisation via un tube hélicoïdal. Cependant, ce type de forme hélicoïdale n'est nullement destinée à obtenir un échauffement d'une chambre de pyrolyse de l'unité de carbonisation.

Le dispositif d'échange de chaleur comportant un tube hélicoïdal est également décrit dans un brevet US-4,639,217.

La demande de brevet européen EP-A1-0686686 décrit un four, notamment destiné à la pyrolyse de déchets, constitué d'une cavité essentiellement cylindrique pour les déchets à traiter tournant autour de son axe longitudinal, une chambre de combustion située autour de ladite cavité et des moyens destinés à introduire du combustible (et non des gaz de pyrolyse) et du comburant dans ladite chambre de combustion. Dans ce document, on décrit que les moyens d'introduction de combustible et de comburants sont orientés tangentiellement par rapport à la paroi de ladite chambre de combustion de manière que la ou les flammes qu'ils créent se développent de manière hélicoïdale autour de ladite cavité contenant les déchets. Dans ce document, la combustion s'effectue de manière non homogène, et par conséquent avec un faible rendement, uniquement dans un espace annulaire entourant ladite cavité.

Par conséquent, un tel dispositif de traitement nécessite toujours des moyens destinés à introduire du combustible et des comburants dans la chambre de combustion de manière à assurer la formation des gaz de pyrolyse. Un tel dispositif ne peut donc fonctionner en continu, uniquement alimenté par l'addition de biomasse.

Les différents dispositifs de l'état de la technique proposés pour obtenir une transformation de la biomasse en un produit tel que le charbon de biomasse sont trop complexes et confrontés à des problèmes de rentabilité, et les produits obtenus sont souvent de mauvaise qualité et non consommables directement sur le terrain.

Cette mauvaise rentabilité des dispositifs de l'état de la technique est notamment due à de mauvais recyclage et combustion des gaz de pyrolyse, en particulier l'impossibilité d'obtenir un dispositif permettant un mélange correct de l'air et des gaz de pyrolyse nécessaire pour obtenir la combustion efficace des gaz de pyrolyse.

### Buts de l'invention

La présente invention vise à fournir un dispositif de transformation de la biomasse en charbon de biomasse, qui ne présenterait pas les inconvénients de l'état de la technique.

Un but particulier de la présente invention vise à fournir un dispositif de conception simple et économique, présentant un rendement suffisamment élevé pour être utilisé aisément dans des petites installations de manière à transformer directement la biomasse produite en un charbon de biomasse de bonne qualité.

La présente invention vise également à mettre au point un dispositif permettant un recyclage et une combustion efficaces des gaz de pyrolyse produits.

La présente invention vise également à mettre au point un recyclage et une combustion efficaces des gaz de pyrolyse produits, dont la combustion serait suffisante pour assurer en continu, sans intervention extérieure (addition supplémentaire de combustible et de comburants), la formation de charbon de biomasse.

### Eléments caractéristiques de l'invention

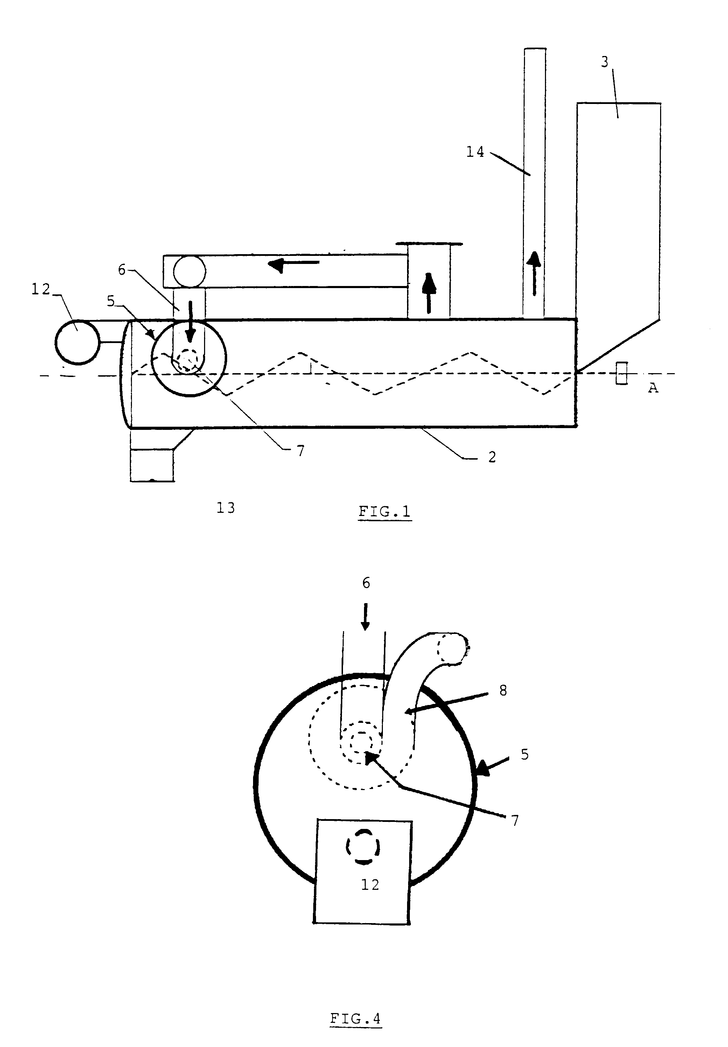

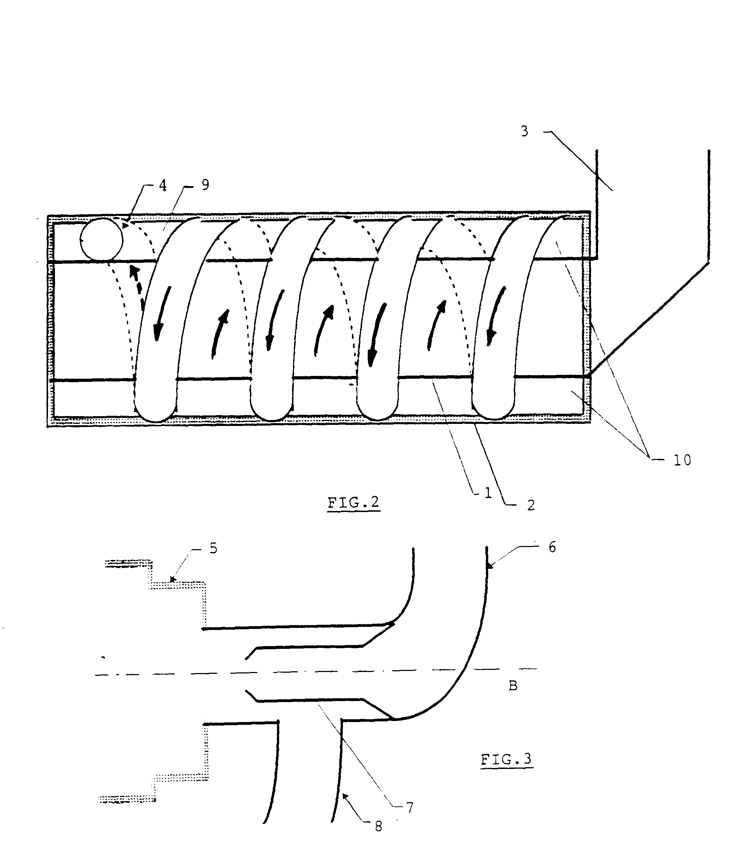

La présente invention concerne un dispositif (représenté à la figure 1) de transformation d'une biomasse en un produit énergétique tel que le charbon de biomasse, comprenant un cylindre externe 2 dans lequel est emboîté un cylindre interne 1 dénommé ci-après cornue, où la carbonisation d'une biomasse s'effectue et donne lieu à la production de gaz de pyrolyse injectés dans une chambre de combustion 5 via un raccordement 6 dont l'axe principal B de l'extrémité 7 est disposé perpendiculairement à l'axe A (de rotation) des cylindres 1 et 2. En effet, les Inventeurs ont découvert de manière inattendue qu'une telle disposition (représentée à la figure 3) permet d'obtenir une flamme stable dans la chambre de combustion, malgré l'éventuelle irrégularité du débit des gaz de pyrolyse produits.

La chambre de combustion 5 est utilisée comme foyer de combustion des gaz de pyrolyse injectés, et est également une chambre de combustion pour un brûleur de type classique 12 utilisé pour préchauffer le dispositif de l'invention jusqu'à une température, de préférence supérieure à 500 °C et inférieure à 600 °C, suffisante pour permettre que le dispositif de l'invention fonctionne en continu.

Avantageusement, le raccordement 6 présente une extrémité rétrécie 7, c'est-à-dire que cette extrémité 7 présente une section plus petite que celle de la canalisation du raccordement 6 où circulent les gaz de pyrolyse. Cette extrémité rétrécie 7 du raccordement 6 telle que représentée à la figure 3 provoque un effet venturi favorisant une alimentation en continu des gaz de pyrolyse dans la chambre de combustion 5.

La figure 4 représente une coupe de la chambre de combustion ainsi que le raccordement 6 permettant l'injection des gaz de pyrolyse dans la chambre de combustion et le raccordement 8 assurant l'apport en comburant (air chaud de l'échangeur de chaleur 4).

Selon l'invention, le dispositif comporte, dans un élément annulaire 10 formant l'espace entre les cylindres 1 et 2, un échangeur de chaleur 4 disposé de manière hélicoïdale autour du cylindre interne 1, et dans lequel circule, de préférence via l'intervention d'un ventilateur (non représenté), de l'air échauffé par les gaz issus de la combustion des gaz de pyrolyse circulant dans la partie libre 9 de l'élément annulaire 10 entre les spires de l'échangeur de chaleur 4 (c'est-à-dire dans la partie non occupée par la partie hélicoïdale de l'échangeur de chaleur 4).

Cette disposition avantageuse représentée à la figure 2 (dans laquelle on a représenté la circulation de l'air opposée à la circulation des gaz de combustion) assure de manière inattendue à la fois un échauffement efficace du cylindre 1 et l'échauffement de l'air circulant dans l'échangeur de chaleur 4, qui facilite la formation en continu des gaz de pyrolyse issus de l'échauffement de la biomasse présente dans ce cylindre interne 1 et leur injection de manière efficace via le raccordement 6 dans la chambre de combustion 5.

De manière inattendue, les Inventeurs ont découvert qu'une telle disposition permettait un fonctionnement en continu du dispositif de l'invention, sans nécessiter l'addition par des moyens supplémentaires de combustible nécessaire pour la formation des gaz de pyrolyse et leur combustion.

Selon l'invention, l'extrémité 8 de l'échangeur de chaleur 4 est également raccordée à la chambre de combustion selon une orientation telle qu'elle assure la combustion en continu desdits gaz de pyrolyse.

Les Inventeurs ont découvert de manière inattendue que lorsque la température de la chambre de combustion est supérieure à 500 °C, le dispositif de l'invention peut fonctionner en continu et permet une alimentation suffisamment homogène et continue des gaz de pyrolyse produits par l'échauffement de la biomasse, qui seront brûlés de manière efficace dans ladite chambre de combustion 5 et provoqueront ensuite un échauffement efficace de l'air circulant dans l'échangeur de chaleur 4.

Pour atteindre cette température supérieure à 500 °C, on effectue un préchauffage jusqu'à une température comprise de préférence entre 500 et 600 °C à l'aide d'un brûleur de type classique 12, par exemple un brûleur à gaz ou à mazout, assurant "la mise en chauffe" du dispositif de l'invention préalablement à l'alimentation en biomasse du cylindre interne 1 par une trémie 3. En effet, lorsque la chambre de combustion atteint une température supérieure à 500 °C, l'alimentation du cylindre interne 1 en biomasse provoque, dans un laps de temps compris entre quelques secondes et quelques minutes (ce laps de temps variant en fonction de l'humidité de la biomasse), un dégagement de gaz de pyrolyse, qui sont brûlés dans la chambre de combustion et utilisés comme source énergétique directe pour le maintien de la température de la chambre de combustion à une valeur supérieure à 500 °C (généralement de l'ordre de 550 °C) pendant toute la durée de la combustion des gaz de pyrolyse tant que l'on alimente le dispositif de manière continue ou discontinue en biomasse.

De manière avantageuse, le dispositif de la présente invention comporte un dispositif d'alimentation continu ou semi-continu de la cornue (cylindre 1) par la biomasse. De préférence, ce dispositif consiste en une trémie 3 d'alimentation en biomasse décrite ci-dessus.

En outre, le dispositif de l'invention peut comprendre un moyen 13 de récupération (de manière continue ou semi-continue) du charbon de biomasse produit. Ce moyen 13 est de préférence un sas disposé à l'extrémité du cylindre 1.

Le dispositif de l'invention comporte également un système d'évacuation tel qu'une cheminée 14 des gaz de carbonisation circulant entre les spires de l'échangeur de chaleur 4.

Il est bien entendu que le dispositif de l'invention peut être de taille variable, adapté en fonction des quantités ou de types de biomasses traités.

De même, la dispositif particulière de certains des éléments du dispositif de l'invention peut être adaptée en conséquence par l'homme du métier.

En outre, le dispositif de l'invention peut également comprendre des moyens additionnels tels que des filtres, des débitmètres, des ventilateurs, etc., permettant d'optimaliser le processus de l'invention.

La présente invention concerne également l'utilisation du dispositif de l'invention pour la transformation d'une biomasse, de préférence constituée de produits résiduels de l'agriculture tels que de la paille, des produits de fauche de graminées ou des roseaux de marécage ou éventuellement de déchets ménagers organiques, en produit énergétique tel que du charbon de biomasse.

## Revendications

1. Dispositif de transformation d'une biomasse en produits énergétiques tels que du charbon de biomasse, comportant un cylindre externe (2) dans lequel est emboîté un cylindre interne (1) contenant une biomasse chauffée de manière à produire des gaz de pyrolyse injectés dans une chambre de combustion (5) via un raccordement (6) raccordant le cylindre (1) à la chambre de combustion (5), caractérisé en ce que l'axe (B) de l'extrémité (7) du raccordement (6) est disposé de manière perpendiculaire à l'axe (A) des cylindres (1, 2).

2. Dispositif selon la revendication 1, caractérisé en ce que le raccordement (6) présente une extrémité (7) rétrécie.

3. Dispositif selon la revendication 1 ou 2, caractérisé en ce qu'un élément annulaire (10) formant l'espace entre les cylindres (1, 2) comporte, monté de manière hélicoïdale autour du cylindre interne (1), un échangeur de chaleur (4) où circule de l'air échauffé par les gaz issus de la combustion des gaz de pyrolyse qui circulent dans la partie libre (9) de l'élément annulaire (10).

4. Dispositif selon l'une quelconque des revendications précédentes, caractérisé en ce qu'il comporte un brûleur de type classique (12) assurant la mise en chauffe de la chambre de combustion, de préférence à une température supérieure à 500 °C, préalablement à l'alimentation en biomasse du cylindre interne (1).

5. Dispositif selon l'une quelconque des revendications précédentes, caractérisé en ce qu'il comporte une trémie (3) d'alimentation en biomasse du cylindre interne (1).

6. Dispositif selon l'une quelconque des revendications précédentes, caractérisé en ce qu'il comporte un moyen (13) de récupération du charbon de biomasse, tel qu'un sas disposé à l'extrémité du cylindre (1).

7. Utilisation du dispositif selon l'une quelconque des revendications précédentes, pour la transformation d'une biomasse en produits énergétiques tels que du charbon de biomasse.

8. Utilisation selon la revendication 7, caractérisée en ce que la biomasse est constituée de produits résiduels de l'agriculture tels que la paille, des produits de fauche de graminées ou des roseaux de marécages.

9. Utilisation selon la revendication 7, caractérisée en ce que la biomasse est constituée par des déchets ménagers organiques.
